# EUROPEAN PATENT APPLICATION

(11) **EP 4 062 767 A1**
(43) Date of publication of application: **28.09.2022**
(21) Application number: 22163727.5
(22) Date of filing: 23.03.2022
(51) Int. Cl.: A23L 11/60, A23C 11/10, A23L 25/00, A23L 33/185

(54) **BATCH PRODUCTION OF PLANT MILK**

(30) Priority: 24.03.2021 EP 21164689
(71) Applicant: Tetra Laval Holdings & Finance S.A., 1009 Pully (CH)
(72) Inventor: Hutmacher, Björn, 16562 Hohen Neuendorf (DE)
(74) Representative: Tetra Pak - Patent Attorneys SE

(57) **Abstract**

A method of producing plant milk enable batch production and may be implemented in a system of low complexity. The method comprises introducing water, plant material and one or more enzymes into a mixing chamber (10A) of a mixing unit (10); operating the mixing unit (10) to generate a slurry (6) that comprises the water, the plant material and the one or more enzymes; transferring the slurry (6) from the mixing unit (10) to a separation unit (15), which separates the slurry (6) into a liquid component (7) and a sludge component (8); transferring the liquid component (7) into the mixing chamber (10A) of the mixing unit (10); adding vegetable oil (5) to the liquid component (7); and operating the mixing unit (10) to produce, in the mixing chamber (10A), plant milk that comprises the vegetable oil (5) and the liquid component (7).

## Description

### Technical Field

The present disclosure generally relates to preparation of plant milk, and in particular to batch production of plant milk.

### Background Art

Plant-based beverages known as plant milk have become increasingly popular over the last years. The plant milk is vegan, healthy, and environmental-friendly. Production of plant milk comprises breaking starch, originating from plant material, for example in form of grain, into simple sugar molecules. The breaking of the starch is done by mixing the plant material with water and one or more enzymes. The production is conventionally made in a continuous process, in which plant material is mixed with water and transferred along a production line between various stations, for example a first station for mixing, a second station for enzymatic treatment, a third station for enzyme deactivation, a fourth station for separation processing, and fifth station for final formulation, a sixth station for homogenization, a seventh station for heat treatment, and an eight station for packaging of the plant milk. Such a production line is adapted for continuous high-capacity production and involves a significant investment.

There is a general need for more flexible production of plant milk, for example in terms of capacity. For example, small scale producers generally have little need for the high-capacity production of existing production lines, and the high investment cost is often a limiting factor for these producers.

### Summary

It is an objective to at least partly overcome one or more limitations of the prior art.

One such objective is to provide a simple and cost-efficient technique for batch production of plant milk.

Another objective is to provide a system for batch production of plant milk including a small number of system components.

One or more of these objectives, as well as further objectives that may appear from the description below, are at least partly achieved by a method of producing plant milk, and a system for producing plant milk according to the independent claims, embodiments thereof being defined by the dependent claims.

A first aspect of the invention is a method of producing plant milk. The method comprises: introducing water, plant material and one or more enzymes into a mixing chamber of a mixing unit; operating the mixing unit to generate a slurry that comprises the water, the plant material and the one or more enzymes; transferring the slurry from the mixing unit to a separation unit, which separates the slurry into a liquid component and a sludge component; transferring the liquid component into the mixing chamber of the mixing unit; adding vegetable oil to the liquid component; and operating the mixing unit to produce, in the mixing chamber, the plant milk that comprises the vegetable oil and the liquid component.

The first aspect is based on the insight that there is a need for technique that enables batch-wise production of plant milk. Such a technique is more readily adaptable to the needs of small-scale producers and may also be implemented to generate large production volumes. According to the first aspect, several process steps are confined to a single mixing unit. By using one and the same mixing unit for multiple purposes in the production of plant milk, it is possible to reduce the number of system components considerably compared to a production line for continuous production.

A second aspect of the invention is a system operable to produce plant milk. The system comprises: a mixing unit with one or more inlets and one or more outlets; a separation unit; first piping connecting an outlet among the one or more outlets of the mixing unit to an inlet of the separation unit; second piping connecting an outlet of the separation unit to an inlet among said at least one inlets of the mixing unit; and a control unit configured to operate the mixing unit in accordance with the method of the first aspect or any of its embodiments.

Still other objectives, aspects as well as features, embodiments and technical advantages will appear from the following detailed description as well as from the drawings.

### Brief Description of the Drawings

Embodiments will now be described, by way of example, with reference to the accompanying schematic drawings.
FIG. 1 is a block diagram of an example system for producing plant milk.
FIG. 2 is a flow chart an example method of producing plant milk.
FIG. 3 is a flow chart of an example startup procedure in the method of FIG. 2.
FIG. 4 is a section view of an example mixing unit for use the system of FIG. 1.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

Before describing embodiments in more detail, a few definitions will be given.

As used herein, "plant milk" refers to a non-dairy beverage made from plant material. Plant milk is also known as plant-based liquid, alternative milk, nut milk or vegan milk.

As used herein, "plant material" refers to any edible plant or combination of plants and may be in any format, ranging from powder to whole plant units. In some embodiments, the plant material comprises one or more of grain (e.g., barley, fonio, maize, millet, oat, rice, rye, sorghum, teff, triticale, spelt, wheat), pseudocereal (e.g., amaranth, buckwheat, quinoa), legume (e.g., lupin, pea, peanut, soy), nut (e.g., almond, brazil, cashew, hazelnut, macadamia, pecan, pistachio, walnut), seed (e.g., chia seed, flax seed, hemp seed, pumpkin seed, sesame seed, sunflower seed), or other plants such as coconut, potato, tiger nut, etc. In some embodiments, the plant material in included among so-called RNGS&S, which denotes Rice, Nuts, Grain, Seed and Soy.

As used herein, "slurry" refers to a mixture of solids that is denser than water and suspended in liquid.

As used herein, "liquefaction" refers to a process involving hydrolysis of a mixture that comprises starch originating from plant material, to lower the viscosity of the mixture. This thinning process may be assisted by addition of one or more enzymes, which break down longer starch chains into smaller ones. Any conventional liquefaction enzyme(s) may be used. Non-limiting examples of liquefaction enzymes include amylases (e.g., α-amylase), and pullulanase.

As used herein, "saccharification" refers to a process of converting starch into sugars and/or dextrin by use of one or more enzymes. In this context, "dextrin" refers to a group of low-molecular weight carbohydrates produced by hydrolysis of starch originating from plant material. Any conventional saccharification enzyme(s) may be used. Non-limiting examples of saccharification enzymes include β-amylase, β-glucanase, and glucoamylase.

As used herein, "vegetable oil" refers to an oil that is extracted from seeds or from fruits. Non-limiting examples of vegetable oils include sunflower oil, rapeseed oil, canola oil, corn oil, peanut oil, cottonseed oil, soybean oil, grape seed oil, olive oil, palm oil, coconut oil and rice bran oil.

As used herein, "high-shear mixer" refers to a mixer that is capable of dispersing, or transporting, one phase or ingredient (liquid, solid, gas) into a main continuous phase (liquid), with which it would normally be immiscible. A high-shear mixer comprises a rotor or impeller which is operable to create flow and shear, often in combination with a stationary component known as a stator. If present, the stator is arranged to create a close-clearance gap between itself and the rotor, to form a high-shear zone for the materials being processed as the materials exit the rotor. The rotor and stator combined together are often referred to as a mixing head, or generator. A high-shear mixer may comprise more than one generator.

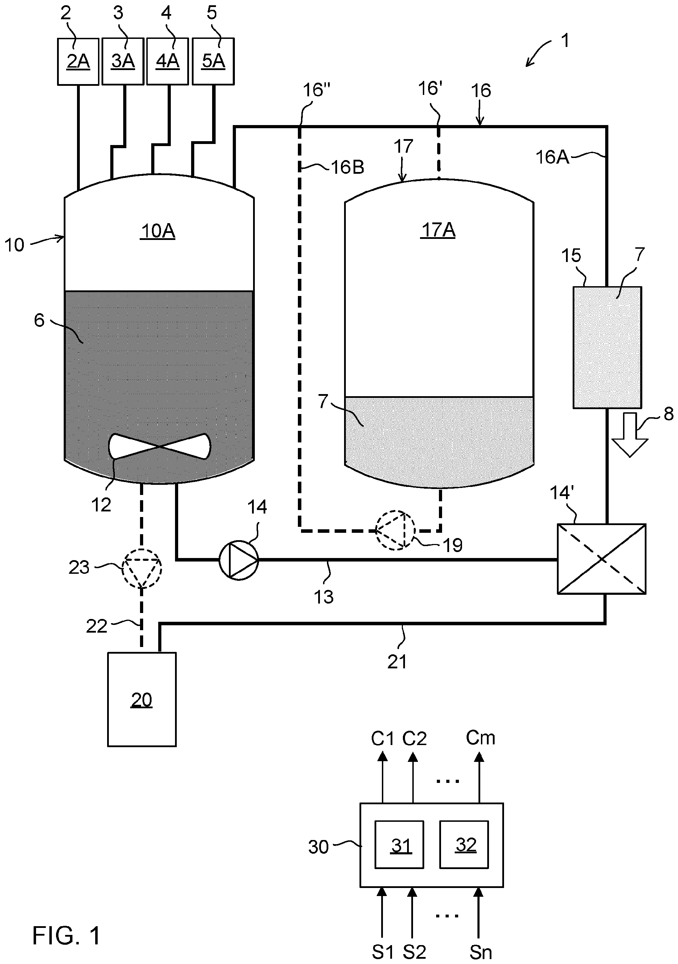

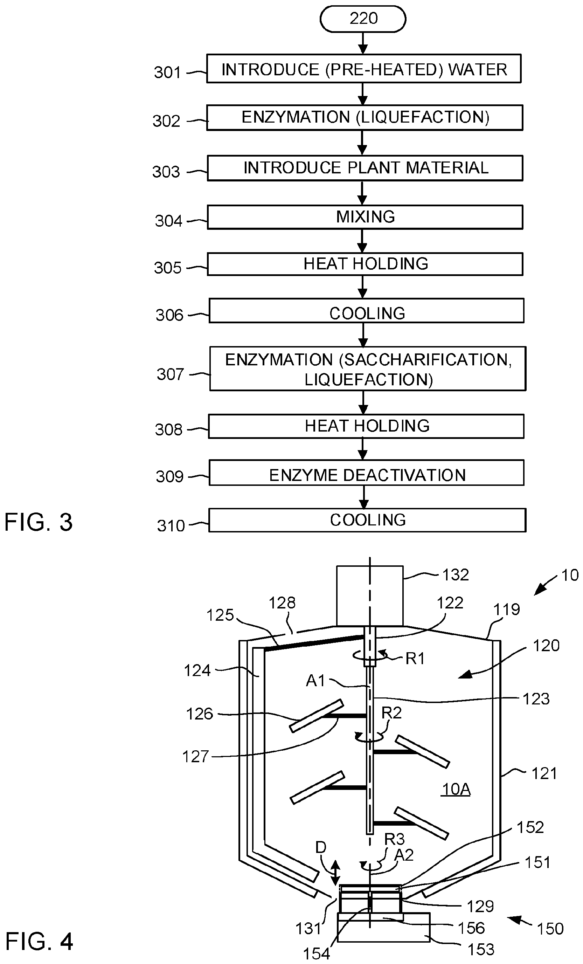

FIG. 1 is a block diagram of a system 1 for generating plant milk in accordance with some embodiments. The system comprises a mixing unit ("mixer") 10, which defines a mixing chamber 10A. A rotatable element 12, for example a rotor, blade or impeller, is operable to rotate inside the mixing chamber 10A. The system further comprises sources 2-5 of various ingredients for use in producing the plant milk. For example, source 2 may provide water 2A, source 3 may provide plant material 3A, source 4 may provide one or more enzymes 4A, and source 5 may provide vegetable oil 5A. It is realized that there may be sources of other ingredients as well, such as salt, flavoring, sweetener, vitamins, minerals, etc. In the illustrated example, the sources 2-5 are connected for fluid communication with a respective inlet in the top portion of the mixer 10. In an alternative, not shown, one or more for the sources 2-5 may be connected to a common inlet. It is also to be understood that further components may be installed to control or facilitate feeding of ingredients to the mixer, such as one or more valves, one or more pumps or feeders, etc. In some embodiments, the mixer 10 is a high-shear mixer, for example as described below with reference to FIG. 4. As will be described further below, the mixer 10 is operable to generate plant milk by performing a two-pass processing inside the mixing chamber 10A. The first pass may result in a slurry 6, indicated as dark grey in FIG. 1, and the second pass may result in the plant milk.

The system 1 further comprises a first piping 13 extending from an outlet in the bottom of the mixer 10 to an inlet of a separation unit 15. The separation unit 15 is configured to process an incoming mixture from the mixer 10, for example the above-mentioned slurry 6, for separation into a liquid component 7 and a sludge component 8. As indicated by an arrow in FIG. 1, the sludge component 8 is not used in the subsequent processing and may be discarded. In some embodiments, the separation unit 15 is a decanter. The liquid component is indicated as light grey in FIG. 1.

In the example of FIG. 1, a switching unit 14' is arranged in the first piping 13. The switching unit 14' is operable to selectively divert the flow in the first piping 13 into a supply piping 21 that extends from the switching unit 14' to a storage or packaging station 20. The station 20 may comprise one or more storage tanks, one or more transportation vessels or shipment containers, or one or more filling machines for filling the plant milk into consumer packages of any type, including but not limited to bottles of glass or plastic, or carton-based packages, which may be sealed for subsequent distribution. The tanks, vessels, containers or packages may or may not be configured for aseptic or semi-aseptic storage and/or distribution of the plant milk.

In the illustrated example, a pumping device 14 is arranged in or on the first piping 13 to transfer a mixture from the mixer 10 towards the switching unit 14'. Thus, the pumping device 14 may be operable to transfer the slurry 6 from the mixing chamber 10A to and through the separation unit 15, and to transfer the plant milk from the mixing chamber 10A to the station 20 via the supply piping 21.

In accordance with a first embodiment, the system 1 comprises a second piping 16 that extends from an outlet of the separation unit 15 to an inlet in the mixer 10. The second piping 16 thereby establishes a return flow path for the liquid component 7 into the mixing chamber 10A. The second piping 16 need not be connected to a separate inlet, as shown, but may be share an inlet with one or more of the sources 2-5. Depending on implementation, a pumping device may be arranged in the second piping 16 to transfer the liquid component 7 from the separation unit 15 to the mixer 10. In the example of FIG. 1, it is assumed that the pumping device 14 drives the liquid component 7 to the mixer 10.

According to a second embodiment, the system further comprises a buffer tank 17, which defines a storage chamber 17A. The buffer tank 17 may or may not include a mixing element that is arranged for rotation inside the storage chamber 17A. As indicated partly by dashed lines in FIG. 1, the second piping 16 comprises a first piping portion or section 16A, which extends from the outlet of the separation unit 15 to an inlet in the buffer tank 17, and a second piping portion or section 16B, which extends from an outlet of the buffer tank 17 to an inlet in the mixer 10. For the avoidance of doubt, it may be noted that there is no fluid connection between 16' and 16" in FIG. 1 in the second embodiment, so that the liquid component 7 from the separation unit 15 is directed into the buffer tank 17. In the illustrated example, a pumping device 19 is arranged in or on the second piping portion 16B to transfer the liquid component 7 from the buffer tank 17 to the mixer 10. In an alternative, the pumping device 19 is omitted and the buffer tank 17 is arranged at a higher elevation than the mixer 10 so that the liquid component 7 is driven by gravity.

According to a third embodiment, which may be combined with the first or second embodiment, the system further comprises a supply piping 22, which extends from a further outlet in the bottom portion of the mixer 10 to the station 20. A pumping device 23 may be arranged in or on the supply piping 22. The supply piping 22 may be selectively opened to transfer plant milk from the mixer 10 to the station 20.

The system in FIG. 1 is merely given as an example and many variations are possible as readily understood by the person skilled in the art. The skilled person also realizes that system may include additional components, such as valves, sensors, etc. Each of the above-mentioned pumping devices may of any suitable type, including but not limited to a positive-displacement pump, a centrifugal pump, or an axial-flow pump. It is also conceivable that pumping device 14 is implemented by a device that is operable to increase the pressure inside the mixing chamber 10A. Correspondingly, the pumping device 19 may be implemented by a device that is operable to increase the pressure inside the storage chamber 17A.

In all embodiments, the system may further comprise a control unit 30, as shown in FIG. 1. The control unit 30 is configured to generate control signals C1, C2, ..., Cm. At least part of the control signals may be provided to control the operation of the mixer 10, for example the operation of the mixing element 12, and the operation of a sub-system for heating and/or cooling of mixing chamber 10A and its contents, so that the operation of the mixer 10 is at least partly automated. Further automation may be achieved by providing control signals to one or more of the pumping devices 14, 19, 23, the switching unit 14', the separation unit 15, or one or more devices (if present) that control the supply of ingredients from the sources 2-5. The control unit 30 may also be configured to receive input signals S1, S2, ..., Sn, for example from one or more sensors (not shown) in the system. Such sensor(s) may measure temperature, pressure, flow rate, etc.

The control unit 30 may be implemented by hardware components, or a combination of hardware components and software instructions. The software instructions may be executed by a processing system 31 in conjunction with computer memory 32 in the control unit 30. The software instructions may be supplied to the control unit 30 on a computer-readable medium, which may be a tangible (non-transitory) product (e.g. magnetic medium, optical disk, read-only memory, flash memory, etc.) or a propagating signal. For example, the control unit 30 may be a generic or specialized computer device. In one embodiment, the control unit 30 is a PLC.

Although not shown in FIG. 1, the control unit 30 may further comprise an MMI (Man Machine Interface), which is configured so that the system may be controlled by an operator and so that information may be presented to the operator about the operation of the system. The MMI may, e.g., comprise one or more of a display, a touch screen, a mouse, a keyboard, a track pad, buttons, sliders, switches and knobs, allowing control data and/or instructions to be inputted by the operator.

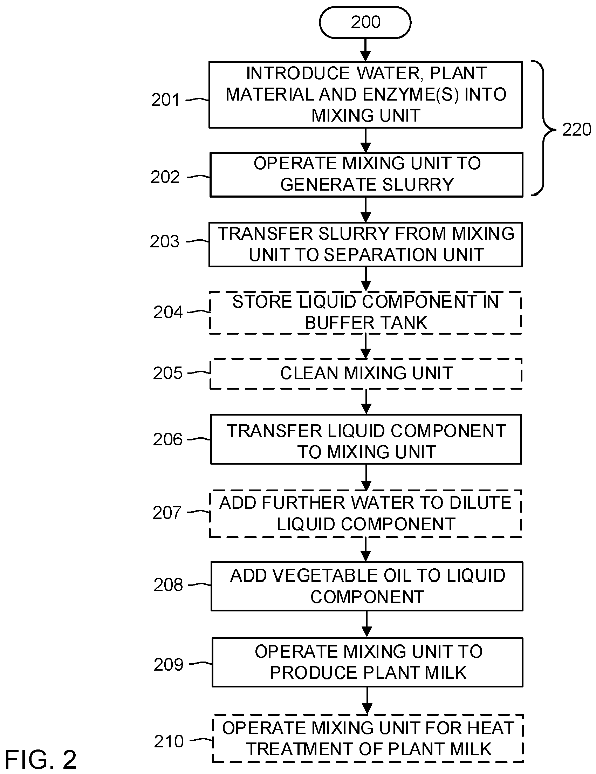

The operation of the system in accordance with the first, second and third embodiments will be further explained with reference to FIG. 2, which is a flow chart of an example method 200 of producing plant milk. Steps 201-203 and 206-210 may be implemented in the first, second and third embodiments, whereas steps 204-205 are specific to the second embodiment.

In step 201, water, plant material and one or more enzymes are introduced into the mixing chamber 10A of the mixer 10, for example from sources 2, 3 and 4 in FIG. 1. The ingredients may be introduced sequentially or in parallel, and in any order, depending on recipe. Step 201 may be performed manually by an operator or be at least partly automated by the control unit 30.

In step 202, the mixer 10 is operated to generate a slurry (cf. 6 in FIG. 1) from the ingredients introduced in step 201. Step 202 may involve operating the mixing element 12 to impart agitation and/or shear to the contents in the mixing chamber 10A. Step 202 may also involve heating and/or cooling the contents in the mixing chamber 10A. During step 202, the mixer 10 may be operated to subject the contents in the mixing chamber 10A to liquefaction and saccharification, which are conventional processes in the field of producing plant milk. Depending on the format of the plant material, step 202 may also involve cutting the plant material into smaller pieces by the action of the mixing element 12. To achieve an efficient cutting of the plant material, the plant material and at least at least part of the water (and optionally at least part of the enzyme(s)) may be introduced into the mixing chamber 10A by step 201, before and/or while the mixer 10 is operated to rotate the mixing element 12. It is realized that the mixing element 12 may be configured to facilitate cutting, for example by provision of cutting elements, such as cutting edges on mixing blades. Step 202 may be at least partly automated by the control unit 30.

An example implementation of steps 201-202 is presented below with reference to FIG. 3 in the form of a startup procedure 220.

In step 203, the slurry is transferred from the mixer 10 to the separation unit 15, which is operated to separate the slurry into a liquid component (cf. 7 in FIG. 1) and a sludge component (cf. 8 in FIG. 1). The sludge component may comprise fibers and other solids from the plant material. In FIG. 1, step 203 may comprise operating the pumping device 14 to drive the slurry 6 from the mixer 10 via the first piping 13 into and through the separation unit 15.

In step 206, the liquid component 7 is transferred back to the mixer 10. In the first embodiment, step 206 may involve operating the pumping device 14, or a further pumping device (not shown) in the second piping 16, to drive the liquid component from the separation device 15 to the mixer 10. If the volume of the slurry in the mixing chamber 10A exceeds the total volume of the pipings 13, 16 and the separation unit 15, the liquid component will be re-introduced into the mixer 10 while the mixing chamber 10A contains an amount of slurry. It is preferable to re-introduce the liquid component so as to form a liquid layer on top of the slurry. To mitigate any undesired mixing between the slurry and the liquid component, the mixing element 12 may be held stationary during the re-introduction and the flow rate of the liquid component 16 in the second piping may be adjusted to minimize mixing by the flow of the liquid component into the mixing chamber 10A. In one implementation, the system 1 is operated to circulate the contents of the mixer 10 through the separation unit 15 and the mixing chamber 10A more than once, to thereby mitigate the effect of any mixing between the re-introduced liquid component and the remaining slurry in the mixing chamber 10A.

In the second embodiment, the method 200 further comprises step 204 before step 206. In step 204, the liquid component is transferred to the buffer tank 17 for intermediate storage. In FIG. 1, step 204 may comprise operating the pumping device 14, or a further pumping device (not shown) in the first piping portion 16A, to drive the liquid component 7 from the separation unit 15 via the first piping portion 16A into the buffer tank 17. Further, in the second embodiment, step 206 transfers the liquid component from the buffer tank 17 to the mixer 10. In FIG. 1, step 206 may involve operating the pumping device 19 in the second piping portion 16B, to drive the liquid component from the buffer tank 17 to the mixer 10.

Step 204 has the technical advantage of enabling a physical separation of the liquid component and the slurry. Such physical separation may be achieved by step 204 storing the liquid component in the buffer tank 17 at least until all of the slurry has been transferred from the mixer 10 to the separation unit 15. At this stage, step 206 may transfer the liquid component from the buffer tank 17 into the mixing chamber 10A. The storage chamber 17A and the mixing chamber 10A may have approximately the same volume to allow for intermediate storage of all of the liquid component in the buffer tank 17.

The second embodiment may further comprise step 205, which is performed while the liquid component is stored in the buffer tank 17 and the mixing chamber 10A is effectively free of slurry, except for residuals. Step 205 involves a cleaning operation to rinse the mixing chamber 10A, for example to remove said residuals, plant fibers and other solids, foam, etc. The cleaning operation may comprise rinsing with water, possible heated, with or without a cleaning agent. Such cleaning is conventional and may be automated, which is also known as cleaning-in-place (CIP) in the art. The cleaning operation in step 205 may also be performed on the piping 13, and optionally the switching unit 14' and the supply piping 21. In a further variant, the cleaning operation may be performed also on the separation unit 15, or all or part of the respective piping portion 16A, 16B.

Step 205 provides the technical advantage of improving the quality of the resulting plant milk, by enabling the mixing chamber 10A to be cleaned before the re-introduction of the liquid component.

In step 207, which is optional, further water may be added to the liquid component in the mixer 10, after step 206. Step 207 presumes that a surplus amount of plant material, and possibly a surplus amount of the one or more enzymes, has been introduced by step 201. In this context, a surplus amount is defined in relation to the corresponding amount stipulated by the recipe for the plant milk. Thus, by introducing the surplus amount, the concentration and viscosity of the resulting plant milk will be increased, resulting in a so-called high gravity product. In step 207, the further water may be added to so that the resulting plant milk has the expected concentration and viscosity in accordance with the recipe. In a variant, the further water may be at least partly added to the mixer 10 during step 209, below. Step 207 may be at least partly automated by the control unit 30.

Step 207 provides the technical advantage of enabling production of a batch of plant milk with a volume that exceeds the volume of the mixing chamber 10A. This will increase the throughput of the system. It is currently believed that step 207 may add further water to achieve a dilution of up to about 3 times, without impairing the quality of the plant milk. Thus, in the example of a mixer that has a mixing chamber with a volume of 1000 liters, and one batch is produced in 2 hours, step 207 may enable production of 3000 liters of plant milk in 2 hours, compared to 3000 liters of plant milk in 6 hours without step 207.

In one implementation, step 206 transfers the liquid component in individual batches into the mixing chamber 10A, and step 207 adds water to the respective batch in the mixing chamber 10A. The respective batch is proportioned to fill a fraction of the mixing chamber 10A, leaving room for the water that is added by step 207.

In step 208, vegetable oil is added to the liquid component in the mixer 10, for example from source 5 in FIG. 1. The addition of vegetable oil is part of the final formulation of the plant milk and shapes the consistency of the plant milk, for example to achieve a desired mouthfeel. The amount of vegetable oil depends on recipe, but may be in the range of 0.1% to 5%, or even more, by volume of the plant milk. In the final formulation, other ingredients may be added as well, including but not limited to flavoring, sweetener, salt, thickener, stabilizer, vitamin, or mineral. In an alternative, at least part of the vegetable oil is added to the liquid component in the buffer tank 17 and/or the piping 16.

In step 209, the mixer 10 is operated to produce the plant milk in the mixing chamber 10A, by mixing the vegetable oil and the liquid component, as well as any further ingredients that may be added in step 208. The incorporation of the vegetable oil is somewhat challenging since the vegetable oil has poor solubility in the water-based liquid component. It is preferable that step 209 operates the mixer 10 to disperse the vegetable oil evenly throughout the liquid component. For example, result of step 209 may be an emulsion that remains stable over a typical shelf life of the plant milk when packaged. The mixer 10 may therefore be operated at high, or even highest, rotational speed of the mixing element 12. Step 209 may benefit from implementing the mixer 10 as a high-shear mixer. Step 209 may be at least partly automated by the control unit 30.

In step 210, which is optional, the mixer 10 is operated to perform a heat treatment of the plant milk within the mixing chamber 10A, for the purpose of eliminating or at least reducing microorganisms in the plant milk. Step 210 may involve heating the plant milk to a predefined temperature for a predefined minimum time ("holding time"). In a non-limiting example, the plant milk may be heated to a temperature in the range of 70 °C to 150 °C, or in the range of 100 °C to 150 °C. The heating may be performed for a holding time in the range of 4 seconds to 10 minutes, depending on temperature and pressure in the mixing chamber 10A. Step 210 may involve direct heating of the plant milk, for example by operating the mixer 10 to inject steam into the mixing chamber 10A. Alternatively or additionally, step 210 may involve indirect heating of the plant milk, by operating the mixer 10 to heat the mixing chamber 10A. For example, a heating medium may be introducing into a jacket surrounding the mixing chamber 10A (cf. 121 in FIG. 4). During step 210, the mixing chamber 10A may be hermetically sealed to boost the heat treatment by achieving the effect of a pressure cooker.

Step 210 enables aseptic or semi-aseptic storage and/or packaging of the plant milk by the station 20 (FIG. 1). With reference to FIG. 1, it is realized that such aseptic storage/packaging may require the piping 13 between the mixer 10 and the switching unit 14' to be heat treated or otherwise disinfected after step 203, when the slurry has been converted into the liquid component. This may be achieved by CIP or injection of stream. In an alternative, the supply piping 22 of the third embodiment may be used for transferring the heat treated plant milk to the station 20. The supply piping 22 may be designated for use with heat treated plant milk and would require less frequent cleaning.

As an alternative or supplement to heat treatment, step 210 may perform a non-thermal process for destruction of microorganisms, such as microfiltration, bactofugation and ultraviolet (UV) treatment, which are all techniques well-known to the person skilled in the art.

FIG. 3 is a flow chart of a startup procedure 220 that corresponds to steps 201-202 of method 200 in FIG. 2. The procedure 220 is performed in accordance with a recipe for producing the plant milk. Many different recipes are possible and the procedure 220 is merely given as an example. The procedure 220 will be described with reference to the system 1 in FIG. 1.

In step 301, water is introduced into the mixing chamber 10A from source 2. The water may or may not be pre-heated. Step 301 may also involve heating the water to a first target temperature, for example 90 °C. Step 301 may introduce all water in accordance with the recipe, or a fraction thereof if the method 200 comprises dilution step 207.

In step 302, a first enzyme is introduced into the mixing chamber 10A from source 4. The first enzyme is configured to support liquefaction. In a non-limiting example, the first enzyme is an α-amylase.

In step 303, plant material is introduced into the mixing chamber 10A, for example in the form of flakes, from source 3.

In step 304, the mixer 10 is operated to mix the water, first enzyme and plant material until liquefaction is complete.

In step 305, the mixture in the mixing chamber 10A is held at a second target temperature for a predefined time ("heat holding"), for example at 90 °C for 25-30 minutes.

In step 306, the mixture in the mixing chamber 10A is cooled to a third target temperature, for example 58 °C. The cooling may be performed by circulating a cooling medium in a jacket around the mixture chamber (cf. 121 in FIG. 4).

In step 307, a second enzyme is introduced into the mixing chamber 10A, optionally together with a third enzyme, from source 4. The second enzyme is configured to support saccharification, and the third enzyme may be configured to support further liquefaction. In a non-limiting example, the second enzyme is a glucoamylase. In a non-limiting example, the third enzyme is an α-amylase or a β-glucanase.

In step 308, the mixture in the mixing chamber 10A is held at a fourth target temperature ("heat holding"), for example at 58 °C. Step 308 may be ended after a predefined time, for example 20-30 minutes, or when a Brix measurement indicates that the sugar content of the mixture in the mixing chamber 10A matches the recipe.

In step 309, the mixture in the mixing chamber 10A is heated to deactivate the enzymes. The mixture may then be heated to a fifth target temperature. In a non-limiting example, the mixture is then heated to 99 °C.

In step 310, the mixture in the mixing chamber 10A is cooled to a sixth target temperature, which is within an acceptable temperature range for the separation unit 15, for example 80 °C.

As understood from the example procedure 220, step 202 in method 200 may comprise heating water, plant material and one or more enzymes in the mixing chamber 10A to activate the one or more enzymes. In the procedure 220, such heating is performed by step 305 and step 308.

Further, the example procedure 220 also shows that step 202 in method 200 may comprise deactivating the one or more enzymes in the mixer 10. In the procedure 220, the deactivation comprises heating the mixture in the mixing chamber 10A. Alternatively or additionally, the one or more enzymes may be deactivated by changing pH and/or by adding regulatory molecules.

Still further, the example procedure 220 also shows that step 202 in method 200 may comprise cooling the mixture in the mixing chamber 10A after deactivating the one or more enzymes by heating. Such cooling may serve to ensure that the mixture has a temperature suitable for the separation unit 15.

FIG. 4 is a side view, partly in section, of a high-shear mixer which may be installed as the mixing unit 10 in the system of FIG. 1 and operated in accordance with the method 200 in FIG. 2. The mixer 10 comprises a tank 119 that defines a mixing chamber 10A and has an inlet 128 for receiving various ingredients for production of plant milk, for example any of the ingredients described hereinabove. The mixer 10 has at its bottom 129 an outlet 131 through which a mixture may leave tank 119. As understood from the foregoing, the mixture may be a slurry or plant milk depending on processing step. To facilitate introducing ingredients into the mixer 10, the mixer 10 may comprise a pressure arrangement (not shown) which is operable to create a pressure in the mixing chamber 10A below atmospheric pressure. To facilitate emptying of the tank 119, the pressure arrangement may be operated to create a pressure in the mixing chamber 10A above atmosphere pressure.

A jacket 121 surrounds a periphery of the tank 119 and has an inlet respectively an outlet (not shown) for allowing a heating or cooling medium (liquid or gaseous) to flow through the jacket 121 to thereby control the temperature of contents inside the tank 119. In some embodiments, the jacket 121 is a so-called dimple jacket.

A double shaft agitator 120 is located inside the mixer 10 and has a double shaft axle 122, 123 that is suspended from the top of the tank 119. The double shaft axle has a first axle 122 that encloses an upper part of a second axle 123, and the two axles 122, 123 are driven to rotate in same or different directions R1, R2 by a motor unit 132 that is arranged at the top of the mixer 10. The two axles 122, 123 extend along and are rotatable about a first rotational axis A1 of the mixer 10.

A first blade 124 is via an arm 125 connected to the first axle 122 so that the first blade 124 rotates in the same direction R1 as the first axle 122 when driven by the motor unit 132. The first blade 124 may be a scraper blade that rotates close to an inner wall of the tank 119, so that contents (ingredients or a mixture) that stick to the inner tank wall may be scraped off.

A second blade 126 is via an arm 127 connected to the second axle 123 so that the second blade 126 rotates in the same direction R2 as the second axle 123 when driven by the motor unit 132. The second blade 126 may be a fluid lifting blade in the sense that it is arranged to make contents in contact with the second blade 126 flow upward from the bottom 129 of the tank 119, in a direction towards the top of the tank 119, when the second axle 123 is driven by the motor unit 132. Any suitable number of second blades 126 may be connected to the second axle 123, such as four blades, as shown in the illustrated example.

A rotor 151 is arranged at the bottom 129 of the tank 119. The rotor 151 is via an axle 154 connected to a rotor engine 153 that, when activated, drives the axle 154 to rotate the rotor 151 in a rotational direction R3. The axle 154 of the rotor 151 extends along and is rotatable about a second rotational axis A2 of the mixer 10. The two axes A1 and A2 are preferably aligned with each other. A stator 152 is arranged around the radial periphery of the rotor 151. An actuator 156 is arranged to move the stator 152 in a direction D that is parallel to the axis of rotation A2 of the rotor 151. The actuator 156 is operable to set the stator 152 in a lowermost position where it surrounds the radial periphery (circumference) of the rotor 151. The stator 152 may also be moved, by the actuator 156, into an uppermost position in which the stator 152 is lifted so as to not surround the radial periphery of the rotor 151. The stator 152 defines openings at the circumference of the rotor 151, thereby allowing contents to be pushed through the stator 152 when the stator 52 in a position where it surrounds all or part of the rotor 151.

The rotor 151, the stator 152 and the actuator 156 form a rotor-stator arrangement ("generator") 150 that allows the shear, which is imparted on the contents by the combination of the rotor 151 and the stator 152, to be varied when the rotor 151 rotates. In detail, when the stator 152 is in its lowermost position (closest to the bottom 129 of the tank 119), contents in the mixing chamber 10A are by the rotation of the rotor 151 drawn towards the upper side of the rotor 151. The contents are then forced outwards in a radial direction of the rotor 151, through the openings in the stator 152 that surround the circumference of the rotor 151.

When the stator 152 is in its uppermost position (farthest away from the bottom 129 of the tank 119), the contents in the tank 119 are by the rotation of the rotor 151 drawn towards the upper side of the rotor 151. The contents are still forced outwards in a radial direction of the rotor 151, but without passing through the openings in the stator 152 since the stator 152 does not surround the circumference of the rotor 151. The stator 152 can be positioned at any location between its lowermost position and its uppermost position, which will vary the amount of the contents that pass through the stator 152. The more contents that pass though the stator 152, the higher the shear will be. Thus, due to the actuator 156 and the movable stator 152, it is possible to vary the shear that is provided by the rotor 151 and the stator 152 during mixing of contents in the mixer 10.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims. Further, while operations are depicted in the drawings in a particular order, this should not be understood as requiring that such operations be performed in the particular order shown or in sequential order, or that all illustrated operations be performed, to achieve desirable results.

## Claims

1. A method of producing plant milk, said method comprising:
introducing (201) water, plant material and one or more enzymes into a mixing chamber (10A) of a mixing unit (10);
operating (202) the mixing unit (10) to generate a slurry (6) that comprises the water, the plant material and the one or more enzymes;
transferring (203) the slurry (6) from the mixing unit (10) to a separation unit (15), which separates the slurry (6) into a liquid component (7) and a sludge component (8);
transferring (206) the liquid component (7) into the mixing chamber (10A) of the mixing unit (10);
adding (208) vegetable oil (5) to the liquid component (7); and
operating (209) the mixing unit (10) to produce, in the mixing chamber (10A), the plant milk that comprises the vegetable oil (5) and the liquid component (7).

2. The method of claim 1, wherein said transferring (206) the liquid component comprises transferring the liquid component (7) from the separation unit (15) into a buffer tank (17), storing (204) the liquid component (7) in the buffer tank (17) at least until all of the slurry (6) has been transferred from the mixing unit (10) to the separation unit (15), and transferring the liquid component (7) from the buffer tank (17) into the mixing chamber (10A) of the mixing unit (10).

3. The method of claim 2, further comprising: cleaning (205) at least the mixing chamber (10A) while the liquid component (7) is stored in the buffer tank (17).

4. The method of claim 2 or 3, further comprising: adding (207) further water to dilute the liquid component (7) before or during said operating (209) the mixing unit (10) to produce the plant milk.

5. The method of claim 4, wherein the liquid component (7) is pumped in batches into the mixing chamber (10A) to fill a fraction of the mixing chamber (10A), and the further water is added to a respective batch of the liquid component (7) in the mixing chamber (10A).

6. The method of any preceding claim, wherein said operating (202) the mixing unit (10) to generate the slurry (6) comprises heating (305, 308) the water, the plant material and the one or more enzymes in the mixing chamber (10A) to activate the one or more enzymes.

7. The method of any preceding claim, wherein said operating (202) the mixing unit (10) to generate the slurry (6) comprises deactivating (308) the one or more enzymes in the mixing unit (10).

8. The method of claim 7, wherein said operating (202) the mixing unit (10) to generate the slurry (6) comprises: cooling the slurry (6) in the mixing unit (10) after the deactivating (202).

9. The method of any preceding claim, further comprising: operating (210) the mixing unit (10) to perform a heat treatment of the plant milk within the mixing chamber (10A) to reduce microorganisms in the plant milk.

10. The method of any preceding claim, wherein said introducing (201) water, plant material and one or more enzymes comprises: introducing the plant material and at least part of the water into the mixing chamber (10A) and operating the mixing unit (10) to cut the plant material into smaller pieces.

11. The method of any preceding claim, wherein said operating (209) the mixing unit (10) to produce the plant milk comprises mixing the vegetable oil (5) with the liquid component (7) to disperse the vegetable oil (5) evenly throughout the liquid component (7).

12. The method of any preceding claim, wherein the vegetable oil (5) is added to the liquid component (7) in the mixing chamber (10A).

13. The method of any preceding claim, wherein the mixing unit (10) is a high-shear mixer.

14. A system operable to produce plant milk, said system comprising:
a mixing unit (10) with one or more inlets and one or more outlets;
a separation unit (15);
first piping (13) connecting an outlet (131) among the one or more outlets of the mixing unit (10) to an inlet of the separation unit (15);
second piping (16) connecting an outlet of the separation unit (15) to an inlet (128) among said at least one inlets of the mixing unit (10); and
a control unit (30) configured to operate the mixing unit (10) in accordance with the method of any one of claims 1-13.

15. The system of claim 14, further comprising a buffer tank (17A), wherein the second piping (16) comprises a first piping portion (16A) connecting the outlet of the separation unit (15) to an inlet on the buffer tank (16A), and a second piping portion (16B) connecting an outlet of the buffer tank (17) to the inlet of the mixing unit (10).
